# EUROPEAN PATENT APPLICATION

(11) **EP 3 316 383 A1**
(43) Date of publication of application: **02.05.2018**
(21) Application number: 15896634.1
(22) Date of filing: 29.06.2015
(51) Int. Cl.: H01M 10/42

(54) **CONTROL CIRCUIT, BATTERY PROVIDED WITH CONTROL CIRCUIT AND BATTERY CONTROL METHOD**

(71) Applicant: SZ DJI Technology Co., Ltd., Shenzhen, Guangdong 518057 (CN)
(72) Inventor: ZHENG, Dayang, Shenzhen Guangdong 518057 (CN); WANG, Lei, Shenzhen Guangdong 518057 (CN); WANG, Wentao, Shenzhen Guangdong 518057 (CN); ZHAN, Juncheng, Shenzhen Guangdong 518057 (CN); XU, Bogao, Shenzhen Guangdong 518057 (CN)
(74) Representative: Goddar, Heinz J.
(86) International application number: PCT/CN2015/082608
(87) International publication number: WO 2017/000103

(57) **Abstract**

The present disclosure provides a control circuit for controlling a battery core, including: a power input end, the power input end being used to be electrically connected to the battery core, to provide a power supply for the control circuit; a ferromagnetic random access memory, the ferromagnetic random access memory having a dynamic mode and a non-fade mode; and a control unit electrically connected with the ferromagnetic random access memory, the control unit being used to acquire state information of the battery core and store the state information to the ferromagnetic random access memory; wherein the control circuit switches on or switches off an electrical connection between the power input end and the battery core, to switch the ferromagnetic random access memory to the dynamic mode or the non-fade mode. The aforementioned control circuit can effectively reduce power consumption and can also effectively save data, to prevent information loss. The present disclosure further provides a battery having the control circuit and a battery control method.

## Description

### TECHNICAL FIELD

The present disclosure relates to a control circuit, a battery having the control circuit and a battery control method.

### BACKGROUND

At present, in terms of a battery on the market, it may be common to add a control circuit to a battery core to implement many circuit functions such as the minimum discharging voltage limit, the maximum charging voltage limit, and temperature and current detection of the battery core. However, when the battery core does not supply power to an external load, the control circuit is still in an operating state. For example, the control unit in the control circuit needs to monitor state information of the battery core regularly and store the state information to a register. When the battery core does not supply power to an external load, the control circuit may still generate corresponding power consumption, and at this point, the battery is still in a power consumption state.

At present, a common solution is as follows: when the battery is in a power-off state, the control unit detects a voltage of the battery core, and, when the voltage of the battery core is lower than a preset value, sends a corresponding control instruction to cause the battery to enter into a low power consumption state. However, even if the battery enters into the low power consumption state, the battery core still needs to provide a corresponding power supply to maintain a state of the register inside the battery. That is, the battery core cannot completely cut off the power supply of the control circuit, and thus cannot completely put an end to loss of electricity.

### SUMMARY

In view of the foregoing contents, it is necessary to provide a battery that can effectively put an end to loss of electricity and a control circuit thereof, and a battery control method.

A control circuit for controlling a battery core, including:
a power input end, the power input end being used to be electrically connected to the battery core to provide a power supply for the control circuit;
a ferromagnetic random access memory, the ferromagnetic random access memory having a dynamic mode and a non-fade mode; and
a control unit electrically connected with the ferromagnetic random access memory, the control unit being used to acquire state information of the battery core and store the state information to the ferromagnetic random access memory;
wherein the control circuit switches on or switches off an electrical connection between the power input end and the battery core to switch the ferromagnetic random access memory to the dynamic mode or the non-fade mode.

Further, the control unit is a Field-Programmable Gate Array (FPGA), a Micro-Controller Unit (MCU) with a control program embedded therein, or a single chip microcomputer.

Further, the state information includes at least one of the followings: capacity of the battery core, voltage of the battery core, current of the battery core, or battery temperature of the battery core.

Further, the control unit further includes a switch unit. The power input end is electrically connected to the battery core through the switch unit, and the control unit, by switching on or switching off the switch unit, switches on or switches off the electrical connection between the power input end and the battery core.

Further, the switch unit is a Metal Oxide Semiconductor Field Effect Transistor, a relay, or a mechanical switch.

Further, the control circuit further includes a trigger key, and the trigger key is used to control the battery core to be powered on or powered off.

Further, when the battery core is controlled, through the trigger key, to switch to a power-off state, the control unit stores the state information to the ferromagnetic random access memory; and when the battery core is controlled, through the trigger key, to switch to a power-on state, the control unit acquires the state information from the ferromagnetic random access memory.

Further, the trigger key is electrically connected with the control unit, the trigger key is used to send a trigger signal to the control unit, and the control unit controls switch-on and switch-off of the power input end and the battery core in accordance with the trigger signal.

Further, the trigger key is electrically connected with the battery core, and when the trigger key is triggered, the battery core temporarily supplies power for the control unit through the trigger key.

Further, the control circuit further includes a key power supply, the trigger key is electrically connected with the key power supply, and when the trigger key is triggered, the key power supply temporarily supplies power for the control unit through the trigger key.

Further, the control circuit further includes a sensing circuit and a charge and discharge connecting end, the charge and discharge connecting end is electrically connected with the battery core through the sensing circuit, the sensing circuit is electrically connected with the control unit, and the sensing circuit is used to sense whether or not the charge and discharge connecting end is in electrical communication with an external device; when the sensing circuit senses that the charge and discharge connecting end is in electrical communication with the external device, the control unit switches on the electrical connection between the power input end and the battery core, and when the sensing circuit senses that the charge and discharge connecting end is out of electrical communication with the external device, the control unit switches off the electrical connection between the power input end and the battery core.

Further, the control circuit further includes a charge and discharge protection circuit and a charge and discharge connecting end, the charge and discharge protection circuit is electrically connected to the control unit and the battery core, the battery core is charged or supplies power to an external load through the charge and discharge protection circuit, and the charge and discharge connecting end is electrically connected to the charge and discharge protection circuit and used to be electrically connected with an external device.

Further, the charge and discharge protection circuit has a switch function, and the control unit controls power-on and power-off of the battery core with respect to the external device through the charge and discharge protection circuit.

Further, the control circuit further includes a power supply switch, the power supply switch is electrically connected between the charge and discharge protection circuit and the battery core and is electrically connected with the control unit, and the control unit controls power-on and power-off of the battery core with respect to the external device through the power supply switch.

Further, the control circuit further includes a charge and discharge protection circuit and a charge and discharge connecting end, the charge and discharge protection circuit is electrically connected to the control unit and the battery core, the battery core is charged or supplies power to an external load through the charge and discharge protection circuit, and the charge and discharge connecting end is electrically connected to the charge and discharge protection circuit and used to be electrically connected with an external device.

Further, the charge and discharge protection circuit is electrically connected with the battery core through the switch unit, and the control unit controls power-on and power-off of the battery core with respect to the external device through the switch unit.

Further, the control circuit further includes a signal interface, the signal interface is electrically connected to the control unit, and the control circuit is electrically connected to an external apparatus through the signal interface, so as to conduct data communication with the external apparatus.

A battery, including a battery core and a control circuit for controlling the battery core, the control circuit including:
a power input end, the power input end being used to be electrically connected to the battery core to provide a power supply for the control circuit;
a ferromagnetic random access memory, the ferromagnetic random access memory having a dynamic mode and a non-fade mode; and
a control unit electrically connected with the ferromagnetic random access memory, the control unit being used to acquire state information of the battery core and store the state information to the ferromagnetic random access memory;
wherein the control circuit switches on or switches off an electrical connection between the power input end and the battery core to switch the ferromagnetic random access memory to the dynamic mode or the non-fade mode.

Further, the battery further includes a housing, and both the battery core and the control circuit are disposed in the housing.

Further, the control unit is a Field-Programmable Gate Array, a Micro-Controller Unit (MCU) with a control program embedded therein, or a single chip microcomputer.

Further, the state information includes at least one of the followings: capacity of the battery core, voltage of the battery core, current of the battery core, or battery temperature of the battery core.

Further, the control circuit further includes a switch unit. The power input end is electrically connected to the battery core through the switch unit, and the control unit, by switching on or switching off the switch unit, switches on or switches off the electrical connection between the power input end and the battery core.

Further, the switch unit is a Metal Oxide Semiconductor Field Effect Transistor, a relay, or a mechanical switch.

Further, the control circuit further includes a trigger key, and the trigger key is used to control the battery core to be powered on or powered off.

Further, when the battery core is controlled, through the trigger key, to switch to a power-off state, the control unit stores the state information to the ferromagnetic random access memory; and when the battery core is controlled, through the trigger key, to switch to a power-on state, the control unit acquires the state information from the ferromagnetic random access memory.

Further, the trigger key is electrically connected with the control unit, the trigger key is used to send a trigger signal to the control unit, and the control unit controls switch-on and switch-off of the power input end and the battery core in accordance with the trigger signal.

Further, the trigger key is electrically connected with the battery core, and when the trigger key is triggered, the battery core temporarily supplies power for the control unit through the trigger key.

Further, the control circuit further includes a key power supply, the trigger key is electrically connected with the key power supply, and when the trigger key is triggered, the key power supply temporarily supplies power for the control unit through the trigger key.

Further, the control circuit further includes a sensing circuit and a charge and discharge connecting end, the charge and discharge connecting end is electrically connected with the battery core through the sensing circuit, the sensing circuit is electrically connected with the control unit, and the sensing circuit is used to sense whether or not the charge and discharge connecting end is in electrical communication with an external device; when the sensing circuit senses that the charge and discharge connecting end is in electrical communication with the external device, the control unit switches on the electrical connection between the power input end and the battery core, and when the sensing circuit senses that the charge and discharge connecting end is out of electrical communication with the external device, the control unit switches off the electrical connection between the power input end and the battery core.

Further, the control circuit further includes a charge and discharge protection circuit and a charge and discharge connecting end, the charge and discharge protection circuit is electrically connected to the control unit and the battery core, the battery core is charged or supplies power to an external load through the charge and discharge protection circuit, and the charge and discharge connecting end is electrically connected to the charge and discharge protection circuit and used to be electrically connected with an external device.

Further, the charge and discharge protection circuit has a switch function, and the control unit controls power-on and power-off of the battery core with respect to the external device through the charge and discharge protection circuit.

Further, the control circuit further includes a power supply switch, the power supply switch is electrically connected between the charge and discharge protection circuit and the battery core and is electrically connected with the control unit, and the control unit controls power-on and power-off of the battery core with respect to the external device through the power supply switch.

Further, the control circuit further includes a charge and discharge protection circuit and a charge and discharge connecting end, the charge and discharge protection circuit is electrically connected to the control unit and the battery core, the battery core is charged or supplies power to an external load through the charge and discharge protection circuit, and the charge and discharge connecting end is electrically connected to the charge and discharge protection circuit and used to be electrically connected with an external device.

Further, the charge and discharge protection circuit is electrically connected with the battery core through the switch unit, and the control unit controls power-on and power-off of the battery core with respect to the external device through the switch unit.

Further, the control circuit further includes a signal interface, the signal interface is electrically connected to the control unit, and the control circuit is electrically connected to an external apparatus through the signal interface, so as to conduct data communication with the external apparatus.

A battery control method, the battery including a battery core and a ferromagnetic random access memory, and the ferromagnetic random access memory having a dynamic mode and a non-fade mode, the method includes:
acquiring state information of the battery core, and storing the state information to the ferromagnetic random access memory; and
controlling power-on or power-off between the battery core and the ferromagnetic random access memory, and switching the ferromagnetic random access memory to the dynamic mode or the non-fade mode to update or read the state information.

Further, the state information includes at least one of the followings: capacity of the battery core, voltage of the battery core, current of the battery core, or battery temperature of the battery core.

Further, the battery further includes a switch unit, and by switching on or switching off the switch unit, an electrical connection between the ferromagnetic random access memory and the battery core is switched on or switched off.

Further, when the battery core is switched to a power-off state, the state information is stored to the ferromagnetic random access memory; and when the battery core is switched to a power-on state, the state information is acquired from the ferromagnetic random access memory.

Further, when a trigger signal is received, switch-on and switch-off between the ferromagnetic random access memory and the battery core are controlled in accordance with the trigger signal.

Further, when a trigger signal is received, the battery core is controlled to supply power for the ferromagnetic random access memory.

Further, the battery further includes a key power supply, and when a trigger signal is received, the key power supply is controlled to supply power for the ferromagnetic random access memory.

Further, the control circuit further includes a charge and discharge connecting end, and switch-on and switch-off between the ferromagnetic random access memory and the battery core are controlled in accordance with switch-on and switch-off of the charge and discharge connecting end and an external device.

The aforementioned battery can effectively cut off the power supply of the control circuit to reduce power consumption of the control circuit to zero. The problem of overdischarge of the battery core would not be a concern, and storage time of the battery can be effectively extended. At the same time, the control circuit is further provided with the ferromagnetic random access memory. Therefore, even if the battery core is in a power-off state, the ferromagnetic random access memory can still save data effectively to prevent information loss. That is, the aforementioned control circuit and the battery having the control circuit can effectively reduce power consumption, and can also effectively save data to prevent information loss.

### BRIEF DESCRIPTION OF THE DRAWINGS

Fig. 1 is a schematic structural diagram of a battery according to an embodiment of the present disclosure.
Fig. 2 is one functional module diagram of the battery shown in Fig. 1.
Fig. 3 is another functional module diagram of the battery shown in Fig. 1.
Fig. 4 is a schematic flow chart of a battery control method according to an embodiment of the present disclosure.

### Description of main reference signs:

| | |
|---|---|
| Battery | 100 |
| Housing | 11 |
| Battery core | 13 |
| Control circuit | 17 |
| Switch unit | 171 |
| Power input end | 172 |
| Control unit | 173 |
| FRAM | 174 |
| Trigger key | s |
| Charge and discharge protection circuit | 175 |
| Charge and discharge connecting end | 176 |
| Signal interface | 178 |
| Sensing circuit | 179 |
| Power supply switch | sw |
| Key power supply | Vcc |

The following DETAILED DESCRIPTION OF THE DISCLOSURE further describes the present disclosure with reference to the aforementioned accompanying drawings.

### DETAILED DESCRIPTION OF THE EMBODIMENTS

The technical solution in embodiments of the present disclosure will be clearly and completely described below with reference to the accompanying drawings of the embodiments of the present disclosure. Apparently, the described embodiments are merely some of the embodiments of the present disclosure rather than all of the embodiments. All other embodiments obtained by a person of ordinary skill in the art based on the embodiments of the present disclosure without creative efforts shall fall within the protection scope of the present disclosure.

It should be noted that, when one element is referred to as "electrically connect" another element, it may be directly on another assembly or it is also possible that there is an element between them. When one element is considered to "electrically connect" another element, it may be a contact connection. For example, it may be a wire connection manner, and it may also be a non-contact connection. For example, it may be a non-contact coupling manner.

Unless otherwise defined, all the technical and scientific terms used herein are the same as the meanings generally understood by technicians belonging to the technical field of the present disclosure. Herein, the terms used in the specification of the present disclosure are merely intended to describe specific embodiments, instead of limiting the present disclosure. The term "and/or" used herein includes any combination and all combinations of one or more related items listed.

Some implementation manners of the present disclosure are described below in detail with reference to the accompanying drawings. In the event of no conflict, embodiments described below and features in the embodiments can be combined with each other.

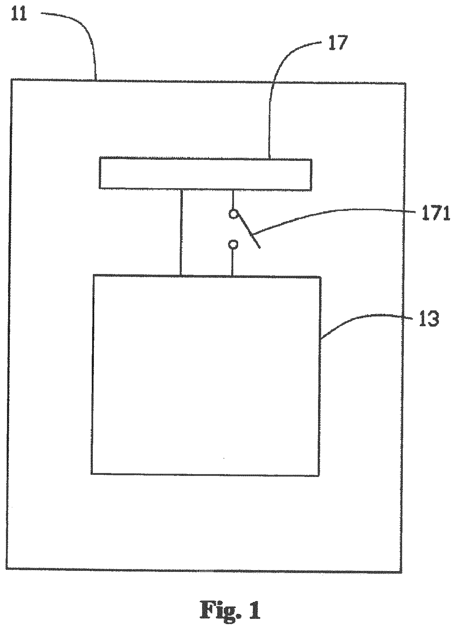

Referring to Fig. 1, a preferred embodiment of the present disclosure provides a battery 100, including a housing 11, a battery core 13, and a control circuit 17. The battery core 13 and the control circuit 17 are both disposed in the housing 11. The control circuit 17 is provided thereon with a switch unit 171, and the switch unit 171 is electrically connected to the battery core 13. The battery 100, by controlling switch-on and switch-off of the switch unit 171, causes the battery core 13 and the control circuit 17 to establish an electrical connection therebetween or to be disconnected from each other, and then causes the battery core 13, through the switch unit 171, to provide a power supply for the control circuit 17 or cut off power supply for the control circuit 17.

The switch unit 171 may be a Metal Oxide Semiconductor Field Effect Transistor (MOS transistor), or other electronic switches such as a relay and a mechanical switch. In this embodiment, the switch unit 171 is a MOS transistor.

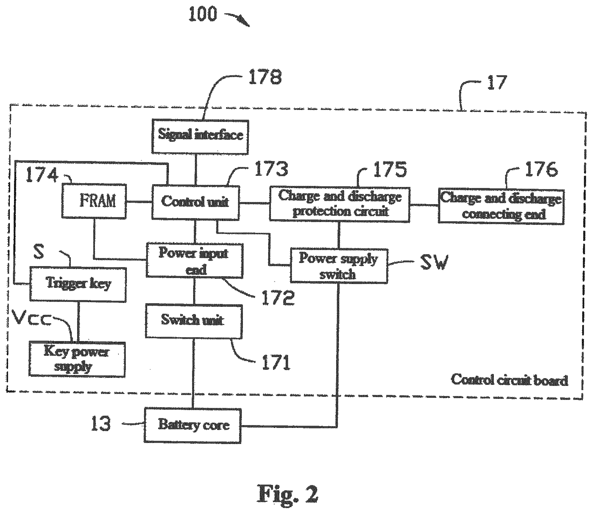

The control circuit 17 may include one or more circuit boards, or include one or more microprocessors. Referring to Fig. 2 together, specifically, the control circuit 17 further includes a power input end 172, a control unit 173, a Ferromagnetic Random Access Memory (FRAM) 174, and a trigger key S. Both the control unit 173 and the FRAM 174 are electrically connected to the power input end 172.

The power input end 172 is electrically connected to an anode and a cathode of the battery core 13 through the switch unit 171 to receive electric energy output by the battery core 13, and then serves as a power supply of the control circuit 17 to supply power for operation of the control unit 173 and the FRAM 174.

The control unit 173 may be a FieldTProgrammable Gate Array (FPGA), a Micro-Controller Unit (MCU) with a control program embedded therein, or a single chip microcomputer and the like. In this embodiment, the control unit 173 is an MCU.

The FRAM 174 is electrically connected to the control unit 173 and used to store state information of the battery and factory information such as model of the battery core, chemical properties of the battery core, production date of the battery, serial number of the battery, and manufacturer of the battery. State information of the battery core 13 at least includes current capacity of the battery core 13, current voltage of the battery core 13, current current of the battery core 13, current battery temperature of the battery core 13, and other parameters. The FRAM 174 has advantages of a fast read and write speed and non-volatility, and can achieve that the current state is rapidly saved when the battery is shut down and, in the event of boot, the state prior to the last power-off is rapidly restored.

In this embodiment, the FRAM 174 may convert between a dynamic mode and a non-fade mode. When operating in the dynamic mode, the FRAM 174 obtains a high dielectric constant due to a special memory structure, and then can be used as an ordinary Dynamic Random Access Memory (DRAM). When operating in the non-fade mode, the FRAM 174, due to a stable state achieved by polarization, can also save data effectively even if without power. That is to say, even if the switch unit 171 is disconnected to cause the battery core 13 to stop supplying power for the control circuit 17, the FRAM 174 can still effectively operate and has a non-fade characteristic.

Further, when the switch unit 171 between the battery core 13 and the control circuit 17 is switched on to cause the battery core 13 to be electrically connected with the control circuit 17, the battery core 13 provides a power supply for the control circuit 17, and at this point, the FRAM 174 operates in the dynamic mode. The control unit 173 may perform a read/write operation on the FRAM 174. For example, the state information of the battery core 13 is stored to the FRAM 174. When the switch unit 171 between the battery core 13 and the control circuit 17 is switched off to cause the battery core 13 to be disconnected from the control circuit 17, the battery core 13 stops supplying power for the control circuit 17, and the FRAM 174 switches to the non-fade mode. At this point, the FRAM 174 can still effectively save the data stored to the FRAM 174 by the control unit 173 to prevent loss of the data.

The trigger key S is used to control the battery core 13 to be powered on or powered off. For example, when the battery core 13 is in a power-on state, that is, the battery core 13 is supplying power to an external load, if a user presses down the trigger key S, the battery core 13 switches to a power-off state. When the battery core 13 is in a power-off state, that is, the battery core 13 stops supplying power to an external load, if the user presses down the trigger key S once again, the battery core 13 will switch to the power-on state. That is, the battery core 13 restores to supply power to an external load. Furthermore, the trigger key S is electrically connected with the control unit 173. The trigger key S is used to send a trigger signal to the control unit 173, and the control unit 173 controls switch-on and switch-off of the switch unit 171 in accordance with the trigger signal.

In this embodiment, the control circuit 17 further includes a key power supply Vcc. The trigger key S is electrically connected with the key power supply Vcc. When the trigger key S controls the battery core 13 to switch to a power-off state, the key power supply Vcc temporarily supplies power for the control unit 173 through the trigger key S. At this point, the control unit 173 stores the current state information to the FRAM 174, and controls the switch unit 171 to switch off to cause the battery core 13 to disconnect the electrical connection with the control circuit 17. That is, the battery core 13 cuts off the power supply of the control circuit 17 to cause power consumption of the control circuit 17 to be zero, thereby effectively extending storage life of the battery 100. When the battery core 13 is controlled, through the trigger key S, to switch to the power-on state, the key power supply Vcc temporarily supplies power for the control unit 173 through the trigger key S. At this point, the control unit 173 controls the switch unit 171 to switch on, so as to establish an electrical connection between the battery core 13 and the control circuit 17 to cause the battery core 13 to continue to supply power for the control circuit 17. At the same time, the FRAM 174 switches to the dynamic mode once again to facilitate the control unit 173 to perform the read/write operation on the FRAM 174. That is, the control circuit 17 can resume normal work, and continue to operate in accordance with the state before the last shutdown.

It can be understood that, in other embodiments, the key power supply Vcc may also be omitted and the trigger key S is directly electrically connected to the battery core 13. At this point, when the trigger key S is triggered, the battery core 13 may temporarily supply power for the control unit 173 directly through the trigger key S.

It can be understood that the control circuit 17 further includes a charge and discharge protection circuit 175 and a charge and discharge connecting end 176. The charge and discharge protection circuit 175 is electrically connected to the control unit 173. The battery core 13 may be charged or supply power to an external load through the charge and discharge protection circuit 175. The charge and discharge connecting end 176 is electrically connected to the charge and discharge protection circuit 175 and used to be electrically connected with an external device (not shown) to provide charge and discharge interfaces of the battery 100. For example, when the battery core 13 is electrically connected to the external device through the charge and discharge connecting end 176, the external device can charge the battery 100 through the charge and discharge connecting end 176.

In this embodiment, the control circuit 17 further includes a power supply switch SW. The power supply switch SW is electrically connected between the charge and discharge protection circuit 175 and the battery core 13, and is electrically connected with the control unit 173. The control unit 173 controls power-on and power-off of the battery core 13 with respect to the charge and discharge protection circuit 175 through the power supply switch SW, and then controls power-on and power-off of the battery core 13 with respect to the external device through the charge and discharge protection circuit 175.

It can be understood that, in other embodiments, the control circuit 17 may also not be provided with a separate power supply switch SW, but causes the charge and discharge protection circuit 175 to be electrically connected with the battery core 13 through the switch unit 171. In this way, the control unit 173 controls power-on and power-off of the battery core 13 with respect to the charge and discharge protection circuit 175 through the switch unit 171, and then controls power-on and power-off of the battery core 13 with respect to the external device through the charge and discharge protection circuit 175. Certainly, in other embodiments, when the charge and discharge protection circuit 175 per se has a switch function, the charge and discharge protection circuit 175 can directly electrically connect with respect to the control unit 173 and the battery core 13. In this way, the control unit 173 can control power-on and power-off of the battery core 13 with respect to the charge and discharge protection circuit 175 through opening and closing of the charge and discharge protection circuit 175, and then control power-on and power-off of the battery core 13 with respect to the external device through the charge and discharge protection circuit 175.

It can be understood that the control circuit 17 further includes a signal interface 178, and the signal interface 178 is electrically connected with the control unit 173 and used to establish an electrical connection between the control circuit 17 and another external apparatus, for example, an unmanned aerial vehicle, so as to enable the external apparatus to conduct data communication with the control circuit 17.

It can be understood that, when the battery core 13 is in the power-on state, the control circuit 17 operates normally. At this point, the FRAM 174 in the control circuit 17 operates in the dynamic mode, and the control unit 173 can acquire the state information of the battery core 13 regularly or in real time and write the acquired state information into the FRAM 174. If, at this point, the user presses down the trigger key S, the battery core 13 switches to the power-off state. At this point, the battery core 13 or the key power supply Vcc temporarily supplies power for the control unit 173 through the trigger key S, and the control unit 173 acquires the state information of the battery core 13 and stores the state information to the FRAM 174. Next, the control unit 173 switches off the switch unit 171 to cause the battery core 13 to disconnect the electrical connection with the control circuit 17. That is, the battery core 13 cuts off the power supply of the control circuit 17. At this point, the control circuit 17 stops operating to cause power consumption thereof to be zero, thereby effectively extending storage life of the battery 100. In addition, when the battery core 13 cuts off the power supply of the control circuit 17, the FRAM 174 switches to the non-fade mode. Therefore, even if the battery core 13 is disconnected from the control circuit 17, the FRAM 174 can still effectively save the state information of the battery core 13 to prevent loss of the data.

Alternatively, when the control unit 173 is a mechanical switch, if, at this point, the user presses down the mechanical switch, the battery core 13 switches to the power-off state, and the FRAM 174 saves the state information of the battery core 13 prior to the power-off.

When the battery core 13 is in the power-off state and the user presses down the trigger key S once again, the battery core 13 switches to the power-on state. At this point, the battery core 13 or the key power supply Vcc temporarily supplies power for the control unit 173 through the trigger key S. The control unit 173 controls the switch unit 171 to switch on, and then establishes an electrical connection between the battery core 13 and the control circuit 17 to cause the battery core 13 to continue to supply power for the control circuit 17. At the same time, the FRAM 174 switches to the dynamic mode once again to facilitate the control unit 173 to perform the read/write operation on the FRAM 174. In this way, the control circuit 17 can continue to operate in accordance with the state before the last shutdown.

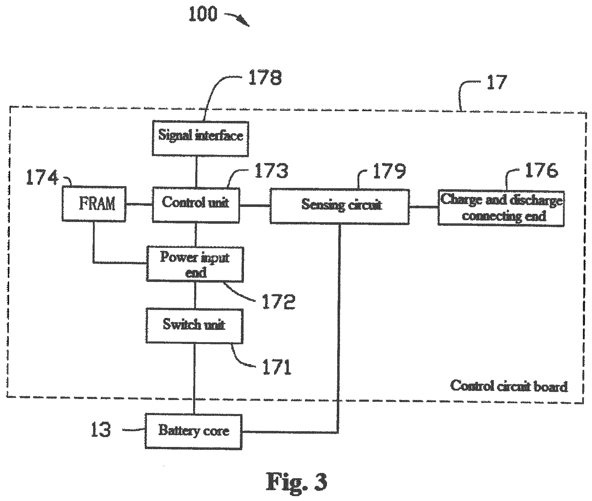

Referring to Fig. 3 together, it can be understood that, in other embodiments, the trigger key S may be omitted. At this point, the control circuit 17 includes a sensing circuit 179. The charge and discharge connecting end 176 is electrically connected with the battery core 13 through the sensing circuit 179. The sensing circuit 178 is further electrically connected with the control unit 173 and used to sense whether or not the charge and discharge connecting end 176 is in electrical communication with an external device. When the sensing circuit 178 senses that the charge and discharge connecting end 176 is in electrical communication with the external device, the control unit 173 controls the switch unit 171 to switch on. When the sensing circuit 178 senses that the charge and discharge connecting end 176 is out of electrical communication with the external device, the control unit 173 controls the switch unit 171 to switch off.

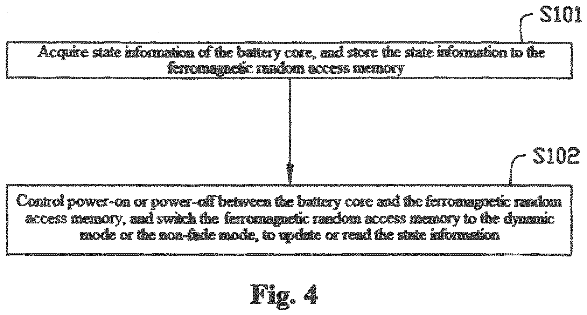

Specifically, referring to Fig. 4, it is a schematic flow chart of a battery control method according to an embodiment of the present disclosure. The method according to the embodiment of the present disclosure can be specifically implemented through a control unit. Specifically, the method includes:
S101: The state information of the battery core 13 is acquired, and the state information is stored to the FRAM 174.

Wherein the state information includes at least one of the followings: capacity of the battery core 13, voltage of the battery core 13, current of the battery core 13, or battery temperature of the battery core 13.

S102: Power-on or power-off between the battery core 13 and the FRAM 174 is controlled, and the FRAM 174 is switched to the dynamic mode or the non-fade mode to update or read the state information.

Further, the battery 100 further includes a switch unit 171. The switch unit 171 is electrically connected with the battery core 13 and the FRAM 174. The control unit 173, by switching on or switching off the switch unit 171, switches on or switches off the electrical connection between the FRAM 174 and the battery core 13.

It can be understood that the battery core 13 has a power-on state and a power-off state. When the battery core 13 is switched to the power-off state, the control unit 173 stores the state information to the FRAM 174. When the battery core 13 switches to the power-on state, the control unit 173 may acquire the state information from the FRAM 174.

It can be understood that the battery 100 further includes a trigger key S. The trigger key S is used to control power-on or power-off of the battery core 13. For example, when the battery core 13 is in a power-on state, that is, the battery core 13 is supplying power to an external load, if a user presses down the trigger key S, the battery core 13 switches to a power-off state. When the battery core 13 is in a power-off state, that is, the battery core 13 stops supplying power to an external load, if the user presses down the trigger key S once again, the battery core 13 will switch to the power-on state. That is, the battery core 13 restores to supply power to an external load.

Furthermore, the trigger key S is electrically connected with the control unit 173. The trigger key S is used to send a trigger signal to the control unit 173, and the control unit 173 controls switch-on and switch-off of the switch unit 171 in accordance with the trigger signal.

Furthermore, the trigger key S may be electrically connected to the battery core 13. Therefore, when the trigger key S is triggered, the battery core 13 can temporarily supply power for the control unit 173 directly through the trigger key S.

Furthermore, the battery 100 further includes a key power supply Vcc, and the key power supply Vcc is electrically connected with the trigger key S. The key power supply Vcc temporarily supplies power for the control unit 173 through the trigger key S.

Furthermore, the control circuit 17 further includes a charge and discharge connecting end 176, and the control unit 173 can control switch-on and switch-off between the FRAM 174 and the battery core 13 in accordance with switch-on and switch-off of the charge and discharge connecting end 176 and the external device.

The aforementioned battery 100 may cut off the power supply of the control circuit 17 to reduce power consumption of the control circuit 17 to zero. The problem of overdischarge of the battery core 13 would not be a concern, and storage time of the battery 100 can be effectively extended. At the same time, the control circuit 17 is provided with the FRAM 174. Therefore, even if the battery core 13 is in a power-off state, the FRAM 174 can still save data effectively to prevent information loss. That is to say, the control circuit 17 and the battery 100 having the control circuit 17 can effectively reduce power consumption, and can also effectively save data to prevent information loss.

The above descriptions are merely embodiments of the present disclosure, but are not intended to limit the patent scope of the present disclosure. Any equivalent structure or equivalent process variation made by using contents of the specification and the drawings of the present disclosure, or directly or indirectly applied to other related technical fields, should be likewise included in the patent protection scope of the present disclosure.

## Claims

1. A control circuit for controlling a battery core, comprising:
a power input end, the power input end being used to be electrically connected to the battery core to provide a power supply for the control circuit;
a ferromagnetic random access memory, the ferromagnetic random access memory having a dynamic mode and a non-fade mode; and
a control unit electrically connected with the ferromagnetic random access memory, the control unit being used to acquire state information of the battery core and store the state information to the ferromagnetic random access memory;
wherein the control circuit switches on or switches off an electrical connection between the power input end and the battery core to switch the ferromagnetic random access memory to the dynamic mode or the non-fade mode.

2. The control circuit as recited in claim 1, wherein the control unit is a Field-Programmable Gate Array (FPGA), a Micro-Controller Unit (MCU) with a control program embedded therein, or a single chip microcomputer.

3. The control circuit as recited in claim 1, wherein the state information comprises at least one of the followings: capacity of the battery core, voltage of the battery core, current of the battery core, or battery temperature of the battery core.

4. The control circuit as recited in claim 1, wherein the control circuit further comprises a switch unit, the power input end is electrically connected to the battery core through the switch unit, and the control unit, by switching on or switching off the switch unit, switches on or switches off the electrical connection between the power input end and the battery core.

5. The control circuit as recited in claim 4, wherein the switch unit is a Metal Oxide Semiconductor Field Effect Transistor, a relay, or a mechanical switch.

6. The control circuit as recited in claim 1, wherein the control circuit further comprises a trigger key, and the trigger key is used to control the battery core to be powered on or powered off.

7. The control circuit as recited in claim 6, wherein, when the battery core is controlled, through the trigger key, to switch to a power-off state, the control unit stores the state information to the ferromagnetic random access memory; and when the battery core is controlled, through the trigger key, to switch to a power-on state, the control unit acquires the state information from the ferromagnetic random access memory.

8. The control circuit as recited in claim 6, wherein the trigger key is electrically connected with the control unit, the trigger key is used to send a trigger signal to the control unit, and the control unit controls switch-on and switch-off of the power input end and the battery core in accordance with the trigger signal.

9. The control circuit as recited in claim 6, wherein the trigger key is electrically connected with the battery core, and when the trigger key is triggered, the battery core temporarily supplies power for the control unit through the trigger key.

10. The control circuit as recited in claim 6, wherein the control circuit further comprises a key power supply, the trigger key is electrically connected with the key power supply, and when the trigger key is triggered, the key power supply temporarily supplies power for the control unit through the trigger key.

11. The control circuit as recited in claim 1, wherein the control circuit further comprises a sensing circuit and a charge and discharge connecting end, the charge and discharge connecting end is electrically connected with the battery core through the sensing circuit, the sensing circuit is electrically connected with the control unit, and the sensing circuit is used to sense whether or not the charge and discharge connecting end is in electrical communication with an external device; when the sensing circuit senses that the charge and discharge connecting end is in electrical communication with the external device, the control unit switches on the electrical connection between the power input end and the battery core, and when the sensing circuit senses that the charge and discharge connecting end is out of electrical communication with the external device, the control unit switches off the electrical connection between the power input end and the battery core.

12. The control circuit as recited in claim 1, wherein the control circuit further comprises a charge and discharge protection circuit and a charge and discharge connecting end, the charge and discharge protection circuit is electrically connected to the control unit and the battery core, the battery core is charged or supplies power to an external load through the charge and discharge protection circuit, and the charge and discharge connecting end is electrically connected to the charge and discharge protection circuit and used to be electrically connected with an external device.

13. The control circuit as recited in claim 12, wherein the charge and discharge protection circuit has a switch function, and the control unit controls power-on and power-off of the battery core with respect to the external device through the charge and discharge protection circuit.

14. The control circuit as recited in claim 12, wherein the control circuit further comprises a power supply switch, the power supply switch is electrically connected between the charge and discharge protection circuit and the battery core and is electrically connected with the control unit, and the control unit controls power-on and power-off of the battery core with respect to the external device through the power supply switch.

15. The control circuit as recited in claim 4, wherein the control circuit further comprises a charge and discharge protection circuit and a charge and discharge connecting end, the charge and discharge protection circuit is electrically connected to the control unit and the battery core, the battery core is charged or supplies power to an external load through the charge and discharge protection circuit, and the charge and discharge connecting end is electrically connected to the charge and discharge protection circuit and used to be electrically connected with an external device.

16. The control circuit as recited in claim 15, wherein the charge and discharge protection circuit is electrically connected with the battery core through the switch unit, and the control unit controls power-on and power-off of the battery core with respect to the external device through the switch unit.

17. The control circuit as recited in claim 1, wherein the control circuit further comprises a signal interface, the signal interface is electrically connected to the control unit, and the control circuit is electrically connected to an external apparatus through the signal interface, so as to conduct data communication with the external apparatus.

18. A battery, comprising a battery core and a control circuit for controlling the battery core, the control circuit comprising:
a power input end, the power input end being used to be electrically connected to the battery core to provide a power supply for the control circuit;
a ferromagnetic random access memory, the ferromagnetic random access memory having a dynamic mode and a non-fade mode; and
a control unit electrically connected with the ferromagnetic random access memory, the control unit being used to acquire state information of the battery core and store the state information to the ferromagnetic random access memory;
wherein the control circuit switches on or switches off an electrical connection between the power input end and the battery core to switch the ferromagnetic random access memory to the dynamic mode or the non-fade mode.

19. The battery as recited in claim 18, wherein the battery further comprises a housing, and both the battery core and the control circuit are disposed in the housing.

20. The battery as recited in claim 18, wherein the control unit is a Field-Programmable Gate Array (FPGA), a Micro-Controller Unit (MCU) with a control program embedded therein, or a single chip microcomputer.

21. The battery as recited in claim 18, wherein the state information comprises at least one of the followings: capacity of the battery core, voltage of the battery core, current of the battery core, or battery temperature of the battery core.

22. The battery as recited in claim 18, wherein the control circuit further comprises a switch unit, the power input end is electrically connected to the battery core through the switch unit, and the control unit, by switching on or switching off the switch unit, switches on or switches off the electrical connection between the power input end and the battery core.

23. The battery as recited in claim 22, wherein the switch unit is a Metal Oxide Semiconductor Field Effect Transistor, a relay, or a mechanical switch.

24. The battery as recited in claim 18, wherein the control circuit further comprises a trigger key, and the trigger key is used to control the battery core to be powered on or powered off.

25. The battery as recited in claim 24, wherein, when the battery core is controlled, through the trigger key, to switch to a power-off state, the control unit stores the state information to the ferromagnetic random access memory; and when the battery core is controlled, through the trigger key, to switch to a power-on state, the control unit acquires the state information from the ferromagnetic random access memory.

26. The battery as recited in claim 24, wherein the trigger key is electrically connected with the control unit, the trigger key is used to send a trigger signal to the control unit, and the control unit controls switch-on and switch-off of the power input end and the battery core in accordance with the trigger signal.

27. The battery as recited in claim 24, wherein the trigger key is electrically connected with the battery core, and when the trigger key is triggered, the battery core temporarily supplies power for the control unit through the trigger key.

28. The battery as recited in claim 24, wherein the control circuit further comprises a key power supply, the trigger key is electrically connected with the key power supply, and when the trigger key is triggered, the key power supply temporarily supplies power for the control unit through the trigger key.

29. The battery as recited in claim 18, wherein the control circuit further comprises a sensing circuit and a charge and discharge connecting end, the charge and discharge connecting end is electrically connected with the battery core through the sensing circuit, the sensing circuit is electrically connected with the control unit, and the sensing circuit is used to sense whether or not the charge and discharge connecting end is in electrical communication with an external device; when the sensing circuit senses that the charge and discharge connecting end is in electrical communication with the external device, the control unit switches on the electrical connection between the power input end and the battery core, and when the sensing circuit senses that the charge and discharge connecting end is out of electrical communication with the external device, the control unit switches off the electrical connection between the power input end and the battery core.

30. The battery as recited in claim 18, wherein the control circuit further comprises a charge and discharge protection circuit and a charge and discharge connecting end, the charge and discharge protection circuit is electrically connected to the control unit and the battery core, the battery core is charged or supplies power to an external load through the charge and discharge protection circuit, and the charge and discharge connecting end is electrically connected to the charge and discharge protection circuit and used to be electrically connected with an external device.

31. The battery as recited in claim 30, wherein the charge and discharge protection circuit has a switch function, and the control unit controls power-on and power-off of the battery core with respect to the external device through the charge and discharge protection circuit.

32. The battery as recited in claim 30, wherein the control circuit further comprises a power supply switch, the power supply switch is electrically connected between the charge and discharge protection circuit and the battery core and is electrically connected with the control unit, and the control unit controls power-on and power-off of the battery core with respect to the external device through the power supply switch.

33. The battery as recited in claim 22, wherein the control circuit further comprises a charge and discharge protection circuit and a charge and discharge connecting end, the charge and discharge protection circuit is electrically connected to the control unit and the battery core, the battery core is charged or supplies power to an external load through the charge and discharge protection circuit, and the charge and discharge connecting end is electrically connected to the charge and discharge protection circuit and used to be electrically connected with an external device.

34. The battery as recited in claim 33, wherein the charge and discharge protection circuit is electrically connected with the battery core through the switch unit, and the control unit controls power-on and power-off of the battery core with respect to the external device through the switch unit.

35. The battery as recited in claim 18, wherein the control circuit further comprises a signal interface, the signal interface is electrically connected to the control unit, and the control circuit is electrically connected to an external apparatus through the signal interface, so as to conduct data communication with the external apparatus.

36. A battery control method, the battery comprising a battery core and a ferromagnetic random access memory, and the ferromagnetic random access memory having a dynamic mode and a non-fade mode, wherein the method comprises:
acquiring state information of the battery core, and storing the state information to the ferromagnetic random access memory; and
controlling power-on or power-off between the battery core and the ferromagnetic random access memory, and switching the ferromagnetic random access memory to the dynamic mode or the non-fade mode to update or read the state information.

37. The battery control method as recited in claim 36, wherein the state information comprises at least one of the followings: capacity of the battery core, voltage of the battery core, current of the battery core, or battery temperature of the battery core.

38. The battery control method as recited in claim 36, wherein the battery further comprises a switch unit, and by switching on or switching off the switch unit, an electrical connection between the ferromagnetic random access memory and the battery core is switched on or switched off.

39. The battery control method as recited in claim 36, wherein, when the battery core is switched to a power-off state, the state information is stored to the ferromagnetic random access memory; and when the battery core is switched to a power-on state, the state information is acquired from the ferromagnetic random access memory.

40. The battery control method as recited in claim 36, wherein, when a trigger signal is received, switch-on and switch-off between the ferromagnetic random access memory and the battery core are controlled in accordance with the trigger signal.

41. The battery control method as recited in claim 36, wherein, when a trigger signal is received, the battery core is controlled to supply power for the ferromagnetic random access memory.

42. The battery control method as recited in claim 36, wherein the battery further comprises a key power supply, and when a trigger signal is received, the key power supply is controlled to supply power for the ferromagnetic random access memory.

43. The battery control method as recited in claim 36, wherein the control circuit further comprises a charge and discharge connecting end, and switch-on and switch-off between the ferromagnetic random access memory and the battery core are controlled in accordance with switch-on and switch-off of the charge and discharge connecting end and an external device.
